# EUROPEAN PATENT APPLICATION

(11) **EP 1 705 826 A1**
(43) Date of publication of application: **27.09.2006**
(21) Application number: 05006525.9
(22) Date of filing: 24.03.2005
(51) Int. Cl.: H04L 9/08, G07F 7/10

(54) **Method and apparatus for encrypting data**

(71) Applicant: DEUTSCHE THOMSON-BRANDT GMBH, 78048 Villingen-Schwenningen (DE)
(72) Inventor: Adolph, Dirk, 30952 Ronnenberg (DE); Schewzow, Andrej, 30163 Hannover (DE); Winter, Marco, 30173 Hannover (DE)
(74) Representative: Rittner, Karsten

(57) **Abstract**

A method and apparatus may provide encrypted digital content through any public communication channel in a secure way to end customers, wherein nor the encryption key neither the decryption key needs to be transmitted through the public channel. The customer has a key storage device (RFID tag) with a content identifier and a decryption key. The method for encrypting data comprises the steps of receiving (S5) a request with a content identifier and an asset identifier (assetID), searching in a first database (DBMS2) the content identifier and retrieving (S7) a corresponding encryption key and related status information indicating if the request is valid. If the request is valid, digital data identified by the asset identifier (assetID) are retrieved (S9) from a second database (DBMS1) and encrypted (E) using the encryption key. Then the encrypted data are sent to a requestor, who can decrypt it with his key storage device (RFID tag).

## Description

### Field of the invention

This invention relates to a method and apparatus for encrypting data.

### Background

Commercial music and video producers are interested in preventing the ubiquitous possibilities of making illegal digital full quality copies of their digital content. Due to limitations in content usage however, consumers do not accept a rigorous prevention of copying digital content by techniques that generally prohibit copies.

One presently used mechanism is that purchased digital content can be bound to one medium or instrument, like an optical disc with a particular identifier or a particular player, and any usage on other instruments like a PC or a portable player device is excluded. This method implies that when the medium carrying the digital content is broken, or when the instrument holding the digital content is substituted by another, all data are unusable and must be purchased again.

Some techniques use encrypted content that can only be decrypted with a secret decryption key that only the authorized user has. However, this approach is insecure from the content providers point of view, because the decryption key can usually be copied and distributed together with the encrypted content. Further, the secret decryption key is often transmitted through public channels, e.g. the Internet or E-mail, so that it can easily be trapped. When also the encrypted content is distributed through these public channels, trapping both the encrypted content and the decryption key can easily circumvent the copy protection. The same applies when the encryption key is transmitted, because it eases a deduction of the decryption key.

### Summary of the Invention

The present invention solves the problem of providing encrypted digital content and a corresponding decryption key in a secure way, so that the encryption is individual but nor the encryption key neither the decryption key needs to be transmitted through a public network.

The present invention provides a solution that allows the user or consumer to copy purchased digital content for personal purpose on any standard medium as often as he likes, and that simultaneously preserves the distributors content rights, because the usage of commercially available digital content remains exclusively at the user or consumer who has purchased the content and thus has the decryption key. Thus, the invention proposes a method for creating conditional access to electronic data. Advantageously, no transmission of a decryption or encryption key is required.

The invention is based upon the usage of a pair of content identifier (ContentID) and encrypted content. An instrument according to the invention requires for decrypting and thus for rendering or playing back encrypted digital content the presence of the content identifier that carries the decryption key. Content identifier and encrypted content are stored on different storage devices, and are therefore physically separated, though logically linked. Both parts are physically located at the consumer. The storage device that holds the content identifier holds also a further identifier, which is the actual decryption key.

Advantageously, the encrypted content needs no additional copy protection. This allows freely generating copies of the encrypted content. Playing back or rendering encrypted content is only possible if the content identifier is present, so that the decryption key can be accessed. The content identifier makes the digital content independent from the instrument it is rendered with, as long as the instrument can read the decryption key from the content identifier device. Preferably the data on the content identifier device cannot be copied, or are very difficult to copy for average users, and the decryption key is unique, which keeps the content owners copyrights. Further, the encryption and decryption keys are logically fully independent from the content identifier, i.e. no algorithm can deduce encryption or decryption key from the content identifier or vice versa. All possible copies of the encrypted content can be rendered only in presence of the content identifier device that provides the decryption key.

One advantage of this method is that it enables re-selling or lending of the purchased digital content, together with the content identifier device. Thus, the invention enables selling the right to use digital content separately from the content itself.

Another advantage is that the same content identifier, encryption key and decryption key can be used for more than one piece of content, so that a user in principle needs only one content identifier device to decrypt various pieces of digital content, e.g. content coming from the same provider. It is however possible that different content providers share the database that maps the content identifier to an encryption key, so that the user can use a content identifier device even for content from different providers.

According to the invention, a ContentID server controls the usage of the content identifier and links it with a digital content. The ContentID server receives a request with a content identifier and an asset identifier from a customer, e.g. via the Internet or a public communications network. The content identifier is a value that is individual to the content identifier device and thus to the customer who sent the request, and the asset identifier indicates uniquely a piece of content that the customer wishes to acquire, e.g. a particular movie. Asset identifiers are therefore not secret, but e.g. retrievable via the Internet, readable as bar code from a DVD cover or the like. The ContentID server maps the content identifier to an individual electronic encryption key by searching it in a first database.

The database provides either a status indication relating to the content identifier or an encryption key, or both. The status indication indicates if the content identifier is valid/permitted, i.e. if the content identifier may be used at all, if it has already been used before or similar.

In one embodiment, each content identifier may be used only once, and the status indication is set from "unused" to "used" status when a request with the corresponding content identifier is received or the associated encryption key is delivered. In another embodiment, a content identifier may be used more than once, and the status indication counts the previous or remaining accesses. In yet another embodiment, it is not limited how often a content identifier may be used and the status indication indicates if the content identifier is an authorized value or not. In a further embodiment, where content identifiers may only be used once, the database contains only unused valid content identifiers and their corresponding encryption keys, so that the existence of an entry corresponding to a content identifier, as detected by the database, is an implicit status indication.

The status indication is checked, and if the access is permitted then the encryption key retrieved from the first database is used for encrypting the requested digital content. The content is identified by the above-mentioned asset identifier and can be retrieved from a second database, which is preferably located within the ContentID server, but may also be connected to the server through a secure connection, e.g. a non-public network. Through the same network, the retrieved content is received for encryption, wherein the retrieved encryption key is used. The encrypted content is then sent to the requesting customer, wherein public networks can be used again because no encryption or decryption keys are included. However it is also possible to send any storage medium that holds the encrypted content, e.g. a DVD.

The main security issue for the content provider is to protect the first database from unauthorized access, which is possible with known methods, particularly because output of the database needs not to be sent to the user. Advantageously no algorithm is used to map the content identifier to an encryption key, so that an access to the database is required for execution of said mapping.

The process of verifying the content identifier, mapping it to an encryption key and encrypting digital content is called "binding" herein, because the content is bound to a particular encryption/decryption key.

A customer can purchase a content identifier device that has a content identifier and a decryption key stored. Then the customer can buy digital content that is specifically encrypted for the use with the decryption key by means of the described ContentID server, and can decrypt it using his content identifier device.

As another advantage, connection to the server is necessary only once, namely during the binding process. Thus, the user is thereafter independent from the server and does not need to contact it again. The encrypted digital content is logically linked to the content identifier device. A further advantage is that purchasing digital content and purchasing the content identifier device may happen at different times, so that the user may select later which content to purchase.

The invention can be used in the following exemplary way: A user has purchased a storage device with two associated identifiers. This storage device can be publicly sold and is preferably difficult to copy for average users, e.g. a radio-frequency identification (RFID) tag or a smartcard. In a preferred embodiment, at least one of the identifiers, the decryption key, is stored electronically on the storage device and the second identifier, the content identifier, is visible and readable, e.g. an alphanumeric code or a barcode printed on the storage device.

When the user wants to buy digital content, he sends the visible and readable second identifier to the content provider. This may happen e.g. via the Internet, but also on the counter within a retail store. The user also sends an asset identifier that indicates which content he wishes to buy, e.g. a code number or barcode read from a cover or an alphanumerical string associated with a particular piece of music or movie.

The content provider receives the second identifier at his ContentID server and searches it in the included database. This database is preferably well protected and not accessible to customers. The database provides for the received second identifier information that indicates whether or not it is admitted, i.e. if it was used for an officially sold content identifier device. If the received second identifier is not admitted, the customer's request is rejected. Otherwise, the database provides also a third identifier that is then used as encryption key for encrypting the digital content identified by the asset identifier.

The encrypted digital content, without encryption or decryption key, can then be sent to the customer who requested it. Thus, neither the encryption key nor the decryption key needs to be transmitted through public channels. Instead, only said second identifier is transmitted, which only the content provider can use. The encrypted content can be decrypted with the first identifier that is electronically retrievable from the user's content identifier device at or near the customer's player. The player needs means for retrieving the identifier from the storage device, and means for applying the identifier as decryption key.

As a particular advantage of the inventive method, the transmitted identifier may be much shorter than the actual encryption key and/or decryption key.

For setting up the above-mentioned first database, it is only necessary to freely select an encryption/decryption key pair and an arbitrary third identifier, associate the decryption key and the third identifier to a content identifier device on which it will be stored and which will be sold to a customer, and store the encryption key together with the third identifier on the data base.

Thus, the customer can request encrypted content that can be decrypted with the content identifier device, without having to transmit encryption or decryption key. Further, only the authorized customer who has the content identifier device can utilize the encrypted content, because the decryption key cannot be copied.

Since no secret key is transmitted, the employed encryption method can in principle be symmetric or asymmetric, i.e. encryption key and decryption key can be different.

In principle, the inventive method for encrypting digital data includes
receiving a request and extracting thereof a first identifier and an asset identifier,
searching in a database the received first identifier, retrieving from the database status information associated with the first identifier, the status information indicating the first identifiers legitimacy,
retrieving from the database a second identifier if the first identifier is admissible, and
encrypting digital data, wherein said second identifier is used as encryption key.

A corresponding apparatus for encrypting digital data includes
means for receiving a request,
means for extracting from the request a first identifier and an asset identifier,
a database means holding different unique pairs of identifiers,
means for searching in the database means the received first identifier,
means for retrieving from the database status information associated with the first identifier, the status information indicating the first identifiers legitimacy, means for retrieving from the database a second identifier if the first identifier is admissible, and
means for encrypting digital data, wherein said second identifier is used as encryption key.

The database search should yield for each possible search value a unique result, e.g. a "not used/enabled" flag and an encryption key, or a "used/disabled" flag.

From the users perspective, the inventive method for decrypting data includes in principle
electronically retrieving from a storage device a first identifier,
receiving an asset identifier, e.g. through user input, electronically transmitting the first identifier together with the asset identifier to a ContentID server of a content provider,
receiving from the ContentID server encrypted digital content according to said asset identifier,
retrieving from the storage device a second identifier, and decrypting said encrypted digital content, wherein the second identifier is used as decryption key.

A corresponding apparatus for decrypting data includes in principle
means for electronically receiving a first identifier and an asset identifier, wherein the first identifier is received from a storage device,
means for electronically transmitting the first identifier together with the asset identifier to a ContentID server of a content provider,
means for receiving from the ContentID server encrypted digital content according to said asset identifier,
means for retrieving from said storage device a second identifier, and
means for decrypting said encrypted digital content, wherein the second identifier is used as decryption key.

An advantage of the invention is that the user needs to generate only a single request to get content, instead of multiple requests that would mean more effort.

A further advantage is that the user can freely copy the encrypted content on standard storage media, but usage is restricted to any single playback device that can access the decryption key from the content identifier device. E.g. when the content identifier device is an RFID tag, the player can decrypt the content only if and while the corresponding RFID tag is near an RFID reader, which is preferably integrated in the player. Generally playback is impossible when the content identifier, and thus the decryption key, is not accessible, at least initially or in regular time intervals.

Another advantage is that the system provides good security also if not every content identifier has its individual encryption/decryption key, so that the number of different encryption keys can be smaller than the number of valid content identifiers. Often the number of theoretically usable and practically available encryption keys is limited, depending on the employed encryption method, but the number of usable content identifiers is practically unlimited, or in other words the content identifier space is much wider than the actually usable encryption key space. E.g. if 10.000 content identifier devices share 500 keys, only 20 devices (0.2%) on average use the same key. Since the customer can read from a device only the content identifier, but not the decryption key, and since the decryption key is not algorithmically deducible from the content identifier, there is a very low chance for finding another content identifier that uses the same key, and thus circumventing the security system by getting unauthorized access to usable content.

In short, method and apparatus according to the invention may provide encrypted digital content through any public communication channel in a secure way to end customers, wherein nor the encryption key neither the decryption key needs to be transmitted through the public channel. The customer has a key storage device with a content identifier and a decryption key. The method for encrypting data comprises the steps of receiving a request with a content identifier and an asset identifier, searching in a first database the content identifier and retrieving a corresponding encryption key and related status information indicating if the request is valid. If the request is valid, digital data identified by the asset identifier are retrieved from a second database and encrypted using the encryption key. Then the encrypted data are sent to a requestor, who can decrypt it with his key storage device.

Advantageous embodiments of the invention are disclosed in the dependent claims, the following description and the figures.

### Brief description of the drawings

Exemplary embodiments of the invention are described with reference to the accompanying drawings, which show in
Fig.1 a block diagram of the decryption section of a player;
Fig.2 a block diagram of a server according to the invention;
Fig.3 the principle of the data structure according to the invention;
Fig.4 the data acquired by a customer;
Fig.5 activity on the ContentID server when a customer acquires digital content; and
Fig.6 playback of encrypted content in a player.

### Detailed description of the invention

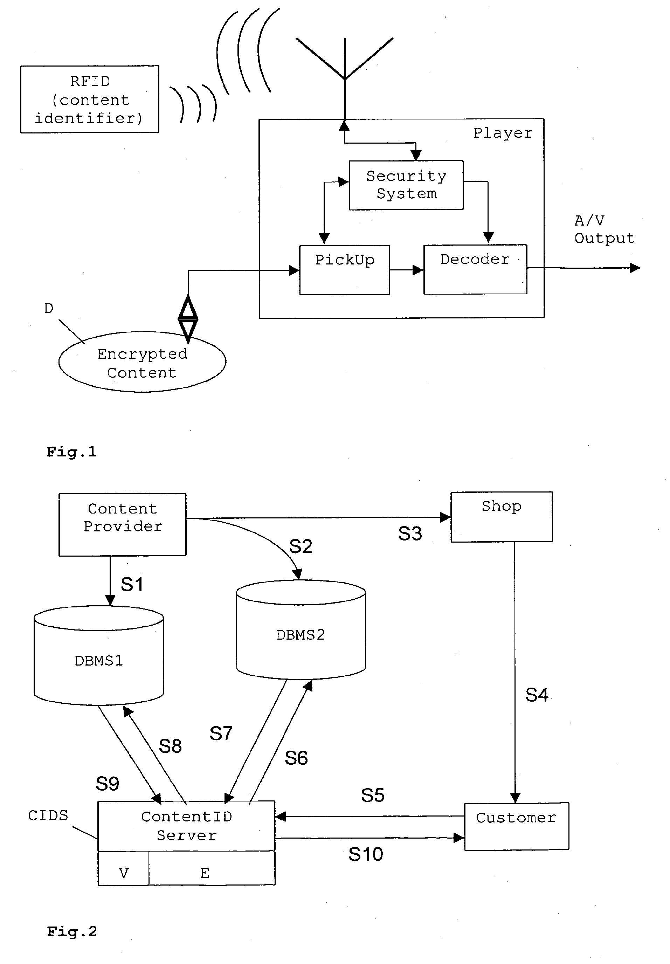

Fig.1 shows the decryption section of an instrument, e.g. a player, which is capable of playing back the encrypted content. The decryption key used to decrypt the encrypted content of an optical disc D is read from an RFID tag and routed e.g. by a security system to a decoder. The RFID reader is preferably integrated into the player, in order to prevent transmission of the decryption key through an easily accessible external interface, but it can in principle also be a separate device that is externally connected. In Fig.1 the RFID reader is part of the security system.

The invention is based upon the physical separation of a content identifier device and the logically bound encrypted content, which both are under control of the customer and can be handled by him. The customer purchases the digital content by binding it to an individual content identifier. The content identifier allows for decrypting and rendering the encrypted digital content, independent from the rendering instrument (e.g. player) and independent from rendering the original digital content or a copy of it. Rendering is possible only in presence of the content identifier holding the decryption key, but with any appropriate instrument.

The content identifier storage device can e.g. be a printed electronic circuit, as developed e.g. by Xerox Corp., or an RFID tag. Both are cheap in production and can be sold separately or together with the encrypted digital content. In the further description, the content identifier device is assumed to be an RFID tag.

One aspect of the invention is the usage of a ContentID server CIDS, as depicted in Fig.2. It is connected S6,S7 to a database DBMS2 holding the identifier values of all authorized content identifier devices, i.e. content identifiers that can be purchased by customers. Database DBMS2 can also be an integral part of the ContentID server CIDS. The database DBMS2 is accessible S2 by a content provider to insert and maintain pairs of content identifier and encryption key. The corresponding pairs of content identifier and decryption key are sold S3,S4 on content identifier devices through shops to customers. Further, the ContentID server CIDS contains an interface unit for the customer to connect S5,S10 and an encryption unit.

A content identifier device has a decryption key stored and has physically attached a unique content identifier, e.g. an alphanumerical value, which is human readable and which is used when ordering encrypted content. E.g. the RFID tag can be integrated in a plastic card that has an ID string printed on it. However, though it is assumed in this example that the ID string is human readable, it can also be printed barcode or electronically stored on the content identifier device, to enable easier electronic ordering. Advantageously, this ID string needs not be very long, since its length is independent from the length of the encryption/decryption key. It must in principle only be long enough to be unique for every content identifier that is planned to be sold. E.g. the content identifier can have 6 characters, corresponding to 48 bit, while the encryption and/or decryption key has 128 or 256 bit.

The human readable identifier that is physically attached to the content identifier device and therefore logically attached to the content identifier, and thus the decryption key, is stored in the content provider's database DBMS2. This is because the decryption key stored within the customers content identifier device should for security reasons not be directly readable by a customer. The customer knows only the human readable identifier and transmits it S5 together with an asset identifier to the content provider's ContentID server CIDS, which routes it S6 to a database DBMS2.

The database DBMS2 verifies if it has a valid entry corresponding to the received content identifier, and retrieves the encryption key uniquely belonging to it, i.e. the encryption key that corresponds to the decryption key that is stored on the content identifier device relating to the received human readable identifier. Then database DBMS2 provides S7 the encryption key to the ContentID Server CIDS. Further, the ContentID Server retrieves S8,S9 from another database DBMS1 the piece of content defined by the asset identifier, encrypts it with the encryption key and provides S10 the encrypted content to the customer.

The content or asset database DBMS1 is in this example maintained by the same content provider as the content identifier database DBMS2, but in principle this can also be done by two different providers that have a cooperative or customer-client relationship.

With the inventive method a provider is able to protect any digital content very effectively against mass pirate copying, since a decryption of the digital content is only possible when the RFID-key is available. The ContentID server CIDS controls the process of encrypting digital content according to the RFID-key that determines the customer's decryption key, and thus the binding of RFID-keys to digital content. The ContentID Server takes care that already bound/used RFID-keys are not used again for other digital content by marking (e.g. removing) used RFID-keys within the RFID database DBMS2. After having encrypted the digital content and marking the content identifier in the database DBMS2 as "already used", the ContentID Server will not have any need to reconnect to the customer. Also the customer does not need to reconnect a second time to the content provider. The encrypted content and any copy of it can be rendered on all the customer's instruments that may read the decryption key from the RFID tag owned by the customer.

In one embodiment, the database DBMS2 holds also data that identify the user or the requested content, i.e. the asset identifier. Then it is possible and secure to re-transmit the same content encrypted with the same encryption key, e.g. if the customer's copy is destroyed or lost, the first transmission has not been successful or the customer has sold his RFID tag to someone who wants the content on another type of medium. If in this embodiment a request is received, the content identifier and the asset identifier are provided to the database DBMS2. The status indication within the database may show that the same asset for the same content identifier has already been sold. Therefore, the ContentID server is instructed to encrypt the same asset with the same encryption key again and send it to the requesting customer. Thus, the invention enables selling the right to use digital content separately from the content itself.

In a preferred embodiment, each content identifier is usable for a defined number of pieces of content, and the database DBMS2 keeps track of the different pieces of content that are already bound to each content identifier. This means that in this preferred embodiment each entry in the database DBMS2 contains the content identifier value, the number and type of allowed pieces of content (if this number is more than one), e.g. five music tracks of a defined category, the number of already bound pieces of content (if the number of allowed pieces of content is one, this is a status flag), and the asset identifiers of the already bound pieces of content. Three such database entries are exemplarily shown in Tab.1. The entries are assumed to be hexadecimal values.

**Tab.1: Exemplary structure of DBMS2 entries**

| ContentID | Allowed | | Asset1 | Asset2 | Asset3 | Encryption key |
|---|---|---|---|---|---|---|
| | # | Category | | | | |
| 783B89 | 3 | TopTenMusic | 2a9f | 27ab | - | 8a9b938ab0 |
| 783BE2 | 3 | Music_8 | 8a1a | 8422 | 88f2 | 0f937a6b81 |
| 783C1A | 1 | Movie_1 | A004 | x | x | b839ab8834 |

In the example of Tab.1 the database DBMS2 holds a first content identifier 783B89 that may be bound to three different music tracks from the top ten of the charts, wherein the owner has already bound two tracks and has one track free, further a second content identifier 783BE2 valid for three different music tracks of another category Music_8, where the owner has already bound all three to content, and a third content identifier 783C1A valid for a single movie of category Movie_1, where the respective owner has already bound it to an asset A004. The database contains for each of these valid content identifiers an individual encryption key. The values in the column "ContentID" represent valid content identifiers, and the values in the columns "Assetl-3" represent identifiers for content, i.e. particular music or video tracks.

The encryption key is used for all assets that are bound to a content identifier. In this example, content identifier values between 783B89 and 783BE2 and between 783BE2 and 783C1A are not valid as content identifiers. Requests with invalid content identifiers can easily be recognized as erroneous, or unauthorized attacks respectively.

If e.g. a request is received for the valid content identifier 783B89 and an asset identified by 2a9f, the database recognizes that the respective asset was already bound to this content identifier, and provide the encryption key 8a9b938ab0 to the ContentID server CIDS in order to encrypt and transmit the asset again, so that the user who has e.g. bought a player for a new disc type can copy the asset to a write-once disc of the new type.

If a request is received for the same content identifier and another asset, with an asset identifier of a different type, e.g. for a movie, the database DBMS2 may compare the required asset identifier with the associated "Category" entry "TopTenMusic", and determine a type mismatch, which means an illegal request. Consequently, the database will signal to the ContentID server and indication to reject the request. Preferably, no encryption key data are read from the database in this case. The category may be implicitly detectable from the asset identifier, or be a separate identifier.

If a request is received for the same content identifier and another asset of a valid category, with an asset identifier other than 2a9f or 27ab, e.g. 2bb3, then the database may recognize that this asset is not yet bound to this content identifier but that this content identifier has one asset free. Thus, it enters the requested asset identifier 2bb3 in the database under "Asset3" and provides the corresponding encryption key 8a9b938ab0 to the ContentID server, which uses it for encrypting a music track identified by the asset identifier.

This embodiment enables easy pricing models, e.g. content identifier devices for one music track from the top ten of the charts having a particular price, and content identifier devices for two such music tracks having the double price etc.

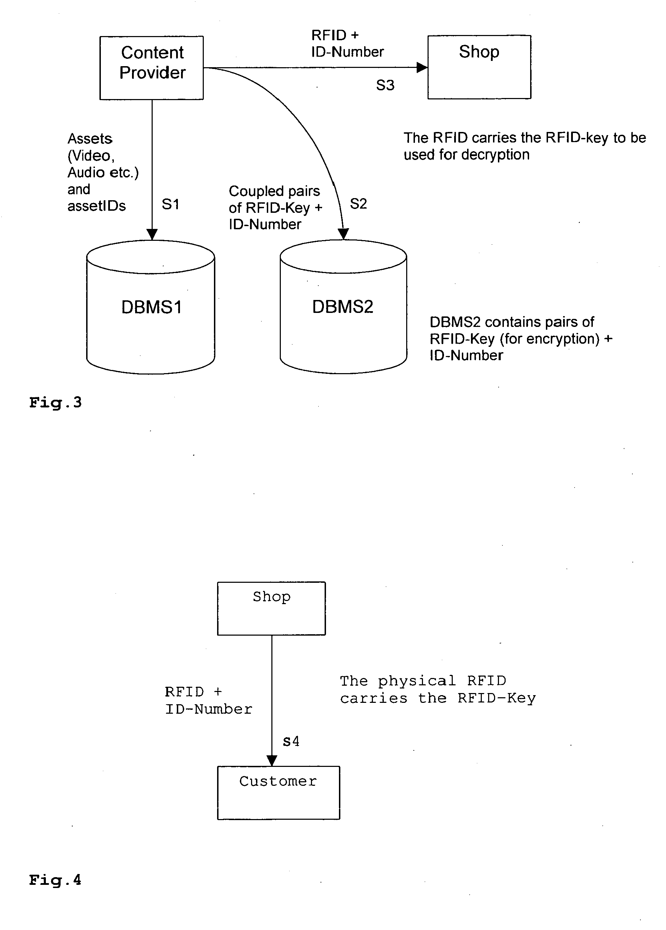

In the following, the function of the ContentID server as depicted in Figs.3-5 is exemplarily described in more detail.

Fig.3 shows the process of preparing the ContentID server for the selling of digital content. Digital content or assets like video files, audio files etc. are stored in a first database DBMS1, herein also called asset database. These assets may be stored in DBMS1 in compressed or uncompressed format. In a second database DBMS2, which is the content identifier database, logical coupled pairs of decryption key and the values that are used as ordering identifiers, e.g. human readable ID-numbers from the content identifier devices, are stored. For the ordering identifiers only registered values are used on legal content identifier devices, so that it is possible for the content provider to differ between admissible and inadmissible values. This can be done e.g. by a lottery system like it is used for pre-paid phone charging, i.e. selecting distinct numbers from a large number space as valid numbers and treating the rest of them as not valid. This prohibits fraud by trying any content identifier by chance.

The assets on DBMS1 and the identifiers on DBMS2 are completely independent from each other and may be updated and maintained separately. It is however possible that the two databases DBMS1, DBMS2 use the same physical storage. The content identifier devices containing an ordering identifier, which may be human readable, and a physical RFID carrying the decryption key are offered in shops for sale. Fig.4 shows what the customer or user gets during the selling step S4, namely a "bundle" of e.g. human readable identifier and physical RFID, i.e. wirelessly readable content identifier. This can be done either without getting a digital content or together with digital content, so that the binding process can be done during the process of selling/purchasing the content identifier device.

Therefore, the right to use digital content can be sold independent from the content itself. Since different types of digital content may have different prices, the ordering identifier associated with the content identifier device may include an indication of its value. E.g. different types of RFID tags are available for audio and video content, and the content provider analyses the respective content identifier value to determine the value, before binding it to content. A content identifier device can also be valid for multiple assets, e.g. ten audio files, which may be subsequently or jointly ordered and encrypted, so that a customer is free to combine different audio files for which only a single decryption tag is needed.

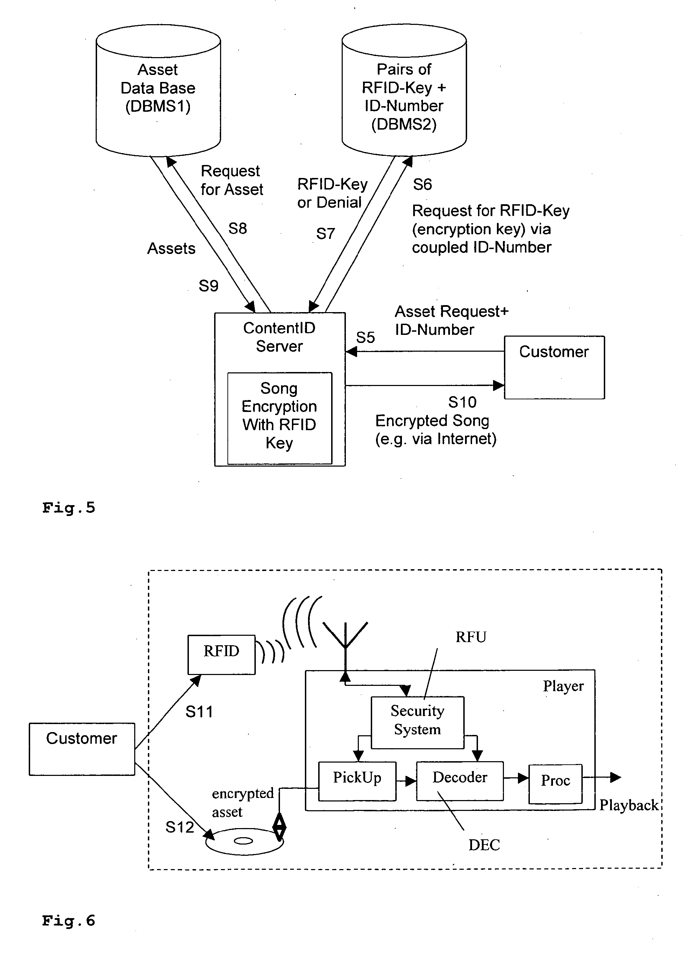

In one embodiment, the content identifier device that the customer can buy is an RFID tag. The content identifier value is also referred to as "ordering identifier". At the time of purchasing the RFID tag, the ordering identifier is independent from any particular digital content or asset, since its ordering number is stored with the status "unused" or "free" in the content providers database. The free RFID tag is used up if the ContentID server executes a binding of the content identifier to the digital content and has stored the binding in the database. Only the ContentID server executes such binding. The case of purchasing the RFID alone without digital content is useful e.g. if the customer plans the download of content via Internet at a later time. In the different case that the customer prefers to purchase digital content together with the RFID, further steps as shown in Fig.5 have to be executed for providing the encrypted asset before leaving the shop.

Fig.5 shows the binding of digital content/assets to the RFID by means of the ContentID server. To bind digital content to the RFID, the human readable ID-number and the digital content identifier, i.e. asset ID, are transferred S5 to the ContentID server. The ContentID server checks S6 on the RFID database DBMS2 if the received ID-number is valid and if the corresponding RIFD-key (content identifier value) has not been used up already. The RFID database DBMS2 returns S7 the status. If the ID-number is invalid or the coupled RFID-key has already been consumed, the ContentID server rejects the binding procedure. Otherwise the RFID database DBMS2 also returns S7 the encryption key and at the same time removes the RFID key, or content identifiers in the general case, from a list of free RFID-keys or content identifiers to prohibit further asset bindings to it. In the next step the ContentID server forwards S8 the digital content request to the Asset Data Base (DBMS1). To save time, the customer asset request to DBMS1 and ID-number check can be executed in parallel and independently from receiving the key from DBMS2. However, any decision of asset delivery to the customer is still based upon reception of the RFID-key being valid.

When the ContentID server receives the asset request, it verifies the validity of the content identifier value, retrieves encryption key S7 and asset S9 from the databases, starts encryption of the digital content by means of the encryption key, and outputs S10 the encrypted content for transfer S10 towards the customer. Another solution could be that the encryption is executed by another external service if this is more secure. After this processing, the customer is independent from the ContentID server.

The process of generating a database at the content provider's side includes selecting for a given encryption method and decryption method pairs of encryption and decryption keys, wherein preferably asymmetric encryption is used, i.e. depending on the encryption and/or decryption method the corresponding encryption and decryption keys are different. Usage of symmetric encryption is however also possible. Then a key identifier is selected preferably in a random process, so that there is no algorithmic connection between the key identifier and the encryption/decryption keys, and associated to the encryption/decryption key pair. The key identifier can be much shorter than the encryption and/or decryption key. The key identifier and the associated encryption key are stored in a database (DBMS2) that remains at the content providers side and is accessible to a ContentID server. The database (DBMS2) allows at least determining for a given key identifier the related encryption key. Further, the key identifier and the associated decryption key are stored in a key storage device, e.g. a smartcard or any article with integrated RFID tag. The decryption key is stored electronically on the key storage device, whereas the key identifier may be human readable, e.g. a printed code number. The key storage device is publicly offered for purchase, and can later be bound to any electronic data by a customer, as described before.

It may however be possible that the content provider resets the status of a particular ordering number to "unused", e.g. if the customers pays again for it. Thus, it is possible for the customer to use his content identifier device again for a different purpose, and thus the customer has to maintain less of such devices.

The rendering of the encrypted data is depicted in Fig.6, where the user inserts a disc with the encrypted asset S12 into a player, and provides his RFID tag S11 serving as content identifier and decryption key server. The RFID-key is read through a radio-frequency unit RFU being part of a security system, and passed to the decryption unit DEC, where it is used as decryption key to decrypt the content. After the decryption unit DEC, the decrypted content is conventionally processed in usual processing units PROC for playback.

Advantageously, the encrypted asset is independent from the medium on which it is stored, and also from the instrument at which it is rendered. Also, any copy made from the encrypted asset will work if the RFID tag is available. Safety copies, lending and selling of purchased encrypted content are therefore possible.

## Claims

1. A method for encrypting data comprising the steps of
- receiving (S5) a request with a first identifier and an asset identifier (assetID);
- searching in a first database (DBMS2) the received first identifier;
- retrieving (S7) from said database (DBMS2) information associated with the first identifier, the information including a second identifier;
- detecting (V) from the information retrieved from the database (DBMS2) if the request is valid;
- if the request is not valid, rejecting or ignoring the request;
- requesting (S8) and retrieving (S9) from a second database (DBMS1) digital data being identified by the received asset identifier (assetID);
- encrypting (E) the digital data retrieved (S9) from the second database (DBMS1), wherein the second identifier is used as encryption key, or for generating or determining an encryption key; and
- sending (S10) the encrypted digital content to a receiver identified within the request.

2. Method according to claim 1, further comprising the steps of
- retrieving (S7) from said database (DBMS2) status information associated with the first identifier and indicating if the request is valid; and
- if the request is valid, modifying the status information in the first database (DBMS2), wherein the modified status information indicates that a valid request with the first identifier has been received, or indicates the remaining number of valid requests allowed for the first identifier.

3. Method according to claim 2, wherein the second identifier is only provided by the first database (DBMS2) if the request is valid.

4. Method according to any of claims 1-3, wherein the first identifier is shorter than the second identifier.

5. Method according to any of claims 1-4, wherein the first database (DBMS2) contains for a plurality of first identifiers identical second identifiers.

6. Method according to any of claims 1-5, wherein the first database (DBMS2) contains for the first identifier an indication indicating for which of a plurality of content types it is valid, and the request is only valid if the indication matches the requested asset identifier (assetID).

7. Method for decrypting data, including
- retrieving a first identifier from a first storage medium on a key device;
- sending a request containing the first identifier and an asset identifier (assetID);
- receiving encrypted data corresponding to the transmitted asset identifier (assetID) as response to said request;
- electronically retrieving a second identifier from a second storage medium on the key device, the second identifier being different from the first identifier; and decrypting the received data using said second identifier as decryption key.

8. Method according to claim 7, wherein the second storage medium is an RFID tag.

9. Apparatus for encrypting data, comprising
- means for receiving (S5) a request with a first identifier and an asset identifier (assetID);
- a first database (DBMS2);
- means for searching in the first database (DBMS2) the received first identifier;
- means for retrieving (S7) from said database (DBMS2) information associated with the first identifier, the information including a second identifier;
- means for detecting (V) from the information retrieved from the database (DBMS2) if the request is valid;
- means for requesting (S8) and means for retrieving (S9) from a second database (DBMS1) digital data being identified by the received asset identifier (assetID);
- means for encrypting (E) the digital data retrieved from the second database (DBMS1), wherein the second identifier is used as encryption key, or used for generating or determining an encryption key; and
- means for sending (S10) the encrypted digital content to a receiver identified within the request.

10. Apparatus according to the preceding claim, further comprising
- means for retrieving (S7) from said database (DBMS2) status information associated with the first identifier and indicating if the request is valid; and
- means for modifying the status information in the first database (DBMS2) if the request is valid, wherein the modified status information indicates that a valid request with the first identifier has been received, or indicates the remaining number of valid requests allowed for the first identifier.
